# EUROPEAN PATENT SPECIFICATION

(11) **EP 2 746 234 B1**
(45) Date of publication and mention of the grant of the patent: **23.10.2019**
(21) Application number: 12840246.8
(22) Date of filing: 14.09.2012
(51) Int. Cl.: C03C 3/066, C03C 3/145, C03C 8/04, C03C 8/24

(54) **BISMUTH-CONTAINING GLASS COMPOSITION**
WISMUTHALTIGE GLASZUSAMMENSETZUNG
COMPOSITION DE VERRE CONTENANT DU BISMUTH

(30) Priority: 13.10.2011 JP 2011226217
(43) Date of publication of application: 25.06.2014
(73) Proprietor: CENTRAL GLASS COMPANY, LIMITED, Ube-shi, Yamaguchi 755-0001 (JP)
(72) Inventor: TOMINAGA, Kouji, Matsusaka-shi Mie 515-0001 (JP)
(74) Representative: Manitz Finsterwald Patent- und Rechtsanwaltspartnerschaft mbB
(86) International application number: PCT/JP2012/073610
(87) International publication number: WO 2013/054639

(56) References cited:
- EP-A1- 1 291 329
- EP-A1- 2 168 927
- EP-A1- 2 253 599
- WO-A1-2006/115143
- WO-A1-2007/075190
- FR-A1- 2 794 120
- JP-A- 2003 095 697
- JP-A- 2004 238 273
- JP-A- 2005 213 103
- JP-A- 2008 019 148
- JP-A- 2008 105 880
- JP-A- 2009 057 238
- JP-A- 2009 227 566
- JP-A- 2010 254 528
- JP-A- 2011 084 437
- US-A1- 2005 181 927
- US-A1- 2008 185 962
- US-A1- 2012 128 904

## Description

### Field of the Invention

The present invention relates to a bismuth-based glass and, more particularly, to a bismuth-based glass composition for use in sealing materials, coating materials and the like.

### Background Art

There are conventionally known glass materials using glass compositions with high chemical resistance and heat resistance as e.g. materials for in coating applications for protection and insulation of electrodes and resistors. The glass composition can be used as it is as the glass material or can be used in the form of a paste prepared from a powder thereof.

Depending on the purposes of use of glass materials, various characteristics such as chemical resistance, mechanical strength, flowability and electrical insulation are required for the glass materials. In particular, excellent low-temperature flowability is an important factor for glass materials. There is a possibility of leakage from sealing portions of the glass materials when the glass materials are insufficient in flowability. Hence, low-melting glasses containing large amounts of PbO, which has a large effect of decreasing the melting points of glasses, are widely used for any purposes (see Patent Document 1).

However, PbO has a large detrimental effect on human bodies and environments so that there is a recent tendency to avoid the use of PbO. Various researches have been made to provide lead-free electronic materials for displays etc. (see Patent Documents 2 and 3). Among lead-free glasses, bismuth-based glasses are particularly expected as alternatives to the PbO-containing low-melting glasses because the characteristics such as chemical resistance and mechanical strength of the bismuth-based glasses are approximately equal to those of the PbO-containing low-melting glasses (see Patent Documents 4 and 5).

### Prior Art Documents

### Patent Documents

Patent Document 1: Japanese Laid-Open Patent Publication No. 2001-052621
Patent Document 2: Japanese Laid-Open Patent Publication No. 2000-219536
Patent Document 3: Japanese Laid-Open Patent Publication No. H09-227214
Patent Document 4: Japanese Laid-Open Patent Publication No. 2011-084437
Patent Document 5: Japanese Laid-Open Patent Publication No. 2009-046379

JP 2003-095697 A discloses a sealing composition which is substantially free of PbO, but contains 60 to 95 wt.% of bismuth-based glass powders and 5 to 40 wt.% of refractory fillers.

JP 2005-213103 A discloses a sealing composition that does not contain lead, but a glass powder containing 70 to 85 wt.% Bi₂O₃, 4.5 to 10 wt.% B₂O₃, 8.0 to 20 wt% ZnO and 0.1 to 1 wt.% Al₂O₃.

US 2005/0181927 A1 and JP 2004-238273 A disclose a bismuth glass composition including 0.5 to 14 wt.% of SiO₂, 3 to 15 wt% of B₂O₃, 4 to 22 wt.% of ZnO, 55 to 90 wt.% of Bi₂O₃ and 4 wt.% or less of Al₂O₃.

EP 2 253 599 A1 discloses a lead-free low-melting-point glass being substantially free of PbO and including 12 to 35 mass% of SiO₂, 3 to 20 mass% of B₂O₃, 35 to 75 mass% of Bi₂O₃ and 0 to 8 mass% of at least one of Li₂O, Na₂O and K₂O.

US 2008/0185962 A1 discloses a lead-free acid-resistant glass composition including 5 to 25 % of SiO₂, 4 to 30 % of B₂O₃, 7 to 30 % of ZnO, 15 to 70 % of Bi₂O₃, 0 to 15 % of Al₂O₃ and 5 to 20% of BaO (in weight percentage).

EP 1 291 329 A1 discloses a practically lead-free glass composition having a low softening point and having water resistance for use in electronic equipment, containing 0.5 to 14 % of SiO₂, 3 to 15 % of B₂O₃, 4 to 22 % of ZnO, 55 to 90 % of Bi₂O₃, 0 to 4 % of Al₂O₃ and 0 to 5% of at least one of Li₂O, Na₂O and K₂O, and 0 to 15% of at least one of MgO, CaO, SrO and BaO (in weight percentage).

FR 2 794 120 A1 discloses sealing glass compositions containing 60 to 85 wt% of Bi₂O₃, 5 to 25 wt% of ZnO, 1 to 5 wt% of SrO, 0.5 to 5 wt% of SiO₂ and 2 to 20 wt.% of B₂O₃.

EP 2 168 927 A1 and JP 2009-046379 A disclose a sealing material including a glass powder which includes 55 to 85 wt% Bi₂O₃, 5 to 20 wt% of B₂O₃, 1 to 15 wt% of ZnO and 0 to 7 wt% of SiO₂.

JP 2009-057238 A discloses a sealing material containing a bismuth-based glass powder containing 62 to 81.4% Bi₂O₃, 2 to 12% B₂O₃, 0 to 5 % Al₂O₃, 1% or more and less than 15% of ZnO, 0 to 10% BaO, 0 to 5% CuO, 0 to 3% Fe₂O₃, 0 to 5% CeO₂ and 0 to 5% Sb₂O₃.

JP 2008-105880 A discloses a bismuth-based sealing material comprising a glass powder containing 30 to 50 mol% Bi₂O₃, 10 to 40 mol% B₂O₃ and 35 to 50 mol% of ZnO and CuO, and substantially no PbO.

JP 2009-227566 A discloses a sealing material for an organic EL display, the sealing material containing a bismuth-based glass powder which contains 0.2 to 15 mass% of CuO and Fe₂O₃.

JP 2010-0254528 A also discloses a sealing material for an organic EL display, the sealing material containing a bismuth-based glass powder which contains 0.2 to 15 mass% of CuO and Fe₂O₃.

WO 2007/075190 A1 discloses a lead-free bismuth glass for an optical patterning glass material which is patterned by light irradiation which contains 3% of Al₂O₃.

WO 2006/115143 A1 discloses a lead-free low melting point glass with transparent insulation which does not contain Al₂O₃.

### Summary of the Invention

### Problems to be solved by the Invention

The bismuth-based glasses are often structurally unstable and, when used in paste materials, are crystalized during firing and lose their flowability due to such crystallization. It is thus difficult for the bismuth-based glasses to secure good adhesion strength and airtightness. As these unstable glasses are easily crystallized, it is necessary to strictly control the firing temperature and thereby difficult to produce the bismuth-based glasses.

Although Patent Documents 4 and 5 teach bismuth-based glass compositions each containing a large amount of bismuth and capable of retarding its crystallization, these bismuth-based glass compositions are stabilized by the addition of coloring components such as CuO and Fe₂O₃. The glass compositions with the coloring components may not be used in displays, LED elements etc. where transparency or specific color is required for the glass compositions.

It is accordingly possible to provide a bismuth-based glass that is transparent and less likely to be crystallized during firing, whilst not comprising an addition of coloring components.

### Means for Solving the Problems

According to the present invention, there is provided a bismuth-based glass composition comprising 55 to 80 mass% of Bi₂O₃, 10 to 15 mass % of B₂O₃, 5 to 15 mass% of ZnO, 0 to 8 mass% of SiO₂, 0.1 to 2 mass% of Al₂O₃, 0 to 3 mass% of TiO₂ and 0 to 3 mass% of ZrO₂; wherein the bismuth-based glass composition contains BaO and optionally SrO, wherein the combined content of BaO and SrO is 0.1 to 5 mass%; and wherein the bismuth-based glass composition is free of a coloring component.

The bismuth-based glass composition according to the present invention has a linear coefficient of thermal expansion of (70 to 90)×10⁻⁷/°C at 30 to 300°C and a softening point of 450 to 530°C.

Preferred examples of the bismuth-based glass composition are disclosed below.

The bismuth-based glass according to the present invention is formed with no coloring component and is less likely to be crystallized during firing.

### Detailed Description of the Embodiments

The bismuth-based glass composition according to the present invention comprises 55 to 80 mass% of Bi₂O₃, 10 to 15 mass % of B₂O₃, 5 to 15 mass% of ZnO, 0 to 8 mass% of SiO₂, 0.1 to 2 mass% of Al₂O₃, 0 to 3 mass% of TiO₂ and 0 to 3 mass% of ZrO₂. The bismuth-based glass composition contains BaO and optionally SrO, and the combined content of BaO and SrO is 0.1 to 5 mass%. The bismuth-based glass composition is free of a coloring component and has a linear coefficient of thermal expansion of (70 to 90)x10⁻⁷/°C at 30 to 300°C and a softening point of 450 to 530°C.

In the present invention, the bismuth-based glass composition is substantially free of PbO and is thus able to prevent the detrimental effect of PbO on human bodies and environments. Herein, the expression "substantially free of PbO" means that PbO may be contained in an amount equivalent to that contained as an impurity in a glass raw material. For example, Pb shows almost no detrimental effect on human bodies and environments and no effect on insulating properties etc. so that the human bodies, environments and insulating properties etc. are not substantially affected by PbO when the content of PbO contained in the bismuth-based glass composition is 0.3 mass% or less.

As mentioned above, Bi₂O₃, B₂O₃, ZnO and RO component are contained in the bismuth-based glass composition in the present invention. Among these components, the sum of the contents of Bi₂O₃, B₂O₃ and ZnO is more than 55 mass%, preferably 65 mass% or more, more preferably 80 mass% or more, based on the total amount of the bismuth-based glass composition. The bismuth-based glass composition contains not only more than 55 mass% of the above three components in total but also 0.1 to 5 mass% of the RO component in the present invention. Depending on the purpose of use of the bismuth-based glass composition, various arbitrary components can be added to the bismuth-based glass composition as long as the contents of Bi₂O₃, B₂O₃, ZnO and RO component are within the above specific ranges.

Preferred examples of the bismuth-based glass composition are those containing 55 to 80 mass% of Bi₂O₃, 0.1 to 5 mass% of RO (SrO + BaO), 10 to 15 mass% of B₂O₃, 5 to 15 mass% of ZnO, 0 to 8 mass% of SiO₂, 0.1 to 2 mass% of Al₂O₃, 0 to 3 mass% of TiO₂ and 0 to 3 mass% of ZrO_{2.}

The Bi₂O₃ is contained in the glass to decrease the softening point of the glass, impart flowability to the glass and adjust the linear expansion coefficient of the glass to within an appropriate range. The Bi₂O₃ content of the glass is in the range of 55 to 80 mass%. The above effects are not exhibited if the Bi₂O₃ content of the glass is less than 55 mass%. If the Bi₂O₃ content of the glass is more than 80 mass%, the glass deteriorates in stability and becomes too high in linear expansion coefficient. The Bi₂O₃ content of the glass is more preferably in the range of 60 to 78 mass%.

The RO (SrO + BaO) component is contained in the glass to prevent a transparency loss of the glass during melting or firing. The RO content of the glass is in the range of 0.1 to 5 mass%. If the RO content of the glass is more than 5 mass%, the glass deteriorates in stability. The RO content of the glass is more preferably in the range of 0.1 to 3 mass%. Herein, BaO can be contained solely or in the form of a mixture with SrO.

The B₂O₃ is contained as a glass forming component to facilitate melting of the glass, prevent an excessive increase in the linear expansion coefficient of the glass and, during firing, impart adequate flowability and low dielectric constant to the glass. The B₂O₃ content of the glass is 10 to 15 mass%. If the B₂O₃ content of the glass is less than 5 mass%, the glass may become insufficient in flowability and lose its sinterability depending on the correlation between the B₂O₃ and the other components. If the B₂O₃ content of the glass is more than 25 mass%, the glass increases in softening point and deteriorates in formability and workability.

The ZnO is contained in the glass to decrease the softening point of the glass and adjust the linear expansion coefficient of the glass to an appropriate range. The ZnO content of the glass is in the range of 5 to 15 mass%. If the ZnO content of the glass is less than 5 mass%, the above effects may not be exhibited depending on the correlation between the ZnO and the other components. The glass is likely to become unstable and cause a transparency loss if the ZnO content of the glass is more than 25 mass%.

The SiO₂ is contained as a glass forming component to form the glass by coexistence with the other glass forming component B₂O₃. The SiO₂ content of the glass is in the range of 0 to 8 mass%. If the SiO₂ content of the glass is more than 8 mass%, the glass increases in softening point and deteriorates in formability and workability. The SiO₂ content of the glass is preferably in the range of 0 to 4 mass%.

The Al₂O₃ is contained in the glass to prevent a transparency loss of the glass during melting and firing. If the Al₂O₃ content of the glass is more than 3 mass%, the glass deteriorates in stability. The Al₂O₃ content of the glass is in the range of 0.1 to 2 mass%.

The TiO₂ is contained in the glass to prevent a transparency loss of the glass during melting and firing. The TiO₂ content of the glass is in the range of 0 to 3 mass%. The glass deteriorates in stability if the TiO₂ content of the glass is more than 3 mass%. The TiO₂ content of the glass is more preferably in the range of 0 to 2 mass%.

The ZrO₂ is contained in the glass to prevent a transparency loss of the glass during melting and firing and improve the chemical resistance of the glass. The ZrO₂ content of the glass is in the range of 0 to 3 mass%. If the ZrO₂ content of the glass is more than 3 mass%, the glass deteriorates in stability. The ZrO₂ content of the glass is more preferably in the range of 0 to 2 mass%.

As to the arbitrary components SiO₂, Al₂O₃, TiO₂ and ZrO₂, the sum of the contents of these arbitrary components (SiO₂ + Al₂O₃ + TiO₂ + ZrO₂) is in the range of 0 to 15 mass%, more preferably 0 to 10 mass%, still more preferably 0.1 to 10 mass%. The SiO₂, Al₂O₃, TiO₂ and ZrO₂ contents of the glass can be adjusted as appropriate within the above range.

Any other component or components as expressed in ordinary oxide form such as MgO, CaO, In₂O₃, SnO₂, TeO₂ etc. may be added as appropriate within the range that does not impair the above-mentioned characteristics of the glass.

When the bismuth-based glass composition has a linear coefficient of thermal expansion of (65 to 95)×10⁻⁷/°C at 30 to 300°C and a softening point of 450 to 530°C it is suitable for coating materials, sealing materials or bulkhead materials for application to high-distortion-point glasses used for flat panel displays, photoelectric cells and other products and to soda-lime silica glasses widely used for various glass products. More specifically, there arises a problem of, in the case of forming, on a high-distortion-point glass or soda-lime silica glass substrate, a coating layer using the bismuth-layer glass composition, separation or cracking of the coating layer or warpage of the substrate if the linear coefficient of thermal expansion of the bismuth-based glass composition is out of the range of (65 to 95)×10⁻⁷/°C. In the present invention the bismuth-based glass composition has a linear coefficient of thermal expansion of (70 to 90)×10⁻⁷/1°C. It preferably has a softening point of 500°C or lower.

It is feasible to use the bismuth-glass composition for structural parts where transparency is required as the bismuth-based glass composition is formed with no coloring component in the present invention. Further, the bismuth-based glass composition according to the present invention is applicable to not only the high-distortion-point glasses and soda-lime silica glasses as mentioned above but also to alumino-borosilicate glasses with less (or almost no) alkali components etc.

It is preferable in the present invention to use the bismuth-based glass composition in the form of a powder although the bismuth-based glass composition can be directly formed into a desired shape such as plate shape. The powder of the bismuth-based glass composition is formed into and used as a paste material by adding a heat-resistant filler, a heat-resistant pigment etc. to the glass composition as needed, and then, kneading the glass composition with an organic oil.

The heat-resistant filler is preferably contained in an amount of 1 to 40 mass% in the paste material using the bismuth-based glass composition. The addition of the heat-resistant filler makes it possible to adjust the linear expansion coefficient of the paste material and improve the mechanical strength of the paste material. There occurs a deterioration in the flowability of the bismuth-based glass composition, which becomes a cause of leakage, if the amount of the heat-resistant filler contained is more than 40 mass%. The amount of the heat-resistant filler contained in the paste material is more preferably 3 to 20 mass%.

Examples of the heat-resistant filler are cordierite, β-eucryptite, zircon, mullite and alumina.

The bismuth-based glass composition according to the present invention shows excellent flowability at low temperatures and thus can suitably be used in sealing materials, bulkhead materials and coating materials for substrates of electronic devices typified by display devices such as plasma display panels, liquid-crystal display panels, electroluminescence panels, fluorescent display panels, electrochromic display panels, light-emitting diode display panels and gas discharge display panels, die-sensitized solar cells and LED elements. The bismuth-based glass composition according to the present invention can also suitably be used in various insulating protection layers because the bismuth-based glass composition is an insulating material.

### Examples

Raw material batches were prepared by weighing and mixing inorganic raw materials according to the predetermined compositions of the respective examples. The raw material batches was put into a platinum melting pot and melted by heating for 1 to 2 hours at 1000 to 1200°C in an electric furnace, thereby obtaining glasses having the compositions of Examples 1 to 6 shown in TABLE 1 and Comparative Examples 1 to 6 shown in TABLE 2. Some parts of the glasses were fed into dies and formed into blocks and tested for the thermal properties (linear expansion coefficient, softening point). The remaining parts of the glasses were each formed into flakes by a rapid-cooling twin-roll forming machine and pulverized into a powder of 1 to 4 µm in average particle diameter and smaller than 10 µm in maximum particle diameter by a pulverization machine.

The softening point of the glass was measured with a thermal analyzer TG-DTA (manufactured by Rigaku Corporation). The linear expansion coefficient of the glass was determined as an elongation percentage at 30 to 300°C by heating at 5 °C/min with a thermal expansion meter.

Each of the above-obtained glass powders was press formed into a button of 4 mm × 12 mm in diameter by a hand press machine. The resulting press formed body was heated at 10 °C/min and fired for 60 minutes at a temperature of 550°C or lower.

The degree of expansion of the press formed body after the firing closely relates to the crystallization degree and flowability of the glass. The press formed body was thus rated as: "O (excellent flowability)" when the press formed body was expanded to a diameter of 13 mm or larger after the firing; "× (poor flowability)" when the degree of expansion of the press formed body was insufficient; "○ (stable glass)" when no crystallization of the glass occurred; and "× (unstable glass) when crystallization of the glass occurred.

The glass compositions and test results are shown in TABLES 1 and 2. Examples 3 to 6 of Table 1 are reference examples.

**TABLE 1**

| Example | | 1 | 2 | 3 | 4 | 5 | 6 |
|---|---|---|---|---|---|---|---|
| Glass composition (mass%) | SiO₂ | 1.2 | | 1.7 | 0.9 | 3.5 | 6.5 |
| | B₂O₃ | 14.0 | 14.1 | 13.0 | 15.0 | 18.6 | 9.3 |
| | Al₂O₃ | 1.0 | 0.4 | | | | 2.0 |
| | ZnO | 15.0 | 7.3 | 14.4 | 9.0 | 11.1 | 17.0 |
| | BaO | 1.8 | 1.4 | 1.1 | 0.8 | 2.0 | 1.7 |
| | SrO | | | 0.7 | 1.1 | | |
| | CaO | | | | 0.2 | | 1.5 |
| | TiO₂ | | | 0.7 | | 0.3 | |
| | ZrO₂ | | | 1.4 | 0.6 | | |
| | Bi₂O₃ | 67.0 | 76.8 | 67.0 | 72.4 | 64.5 | 62.0 |
| Linear expansion coefficient (×10⁻⁷/°C) | | 81 | 87 | 80 | 84 | 79 | 75 |
| Softening point (°C) | | 479 | 464 | 485 | 470 | 490 | 500 |
| Firing temperature (°C) | | 530 | 500 | 540 | 520 | 540 | 550 |
| Flowability | | ○ | ○ | ○ | ○ | ○ | ○ |
| Stability | | ○ | ○ | ○ | ○ | ○ | ○ |

**TABLE 2**

| Comparative Example | | 1 | 2 | 3 | 4 | 5 | 6 |
|---|---|---|---|---|---|---|---|
| Glass composition (mass%) | SiO₂ | 24.7 | 1.6 | | 12.0 | | |
| | B₂O₃ | 8.6 | 8.8 | 12.1 | 3.0 | 27.0 | 5.3 |
| | Al₂O₃ | | | | | 4.5 | 0.2 |
| | ZnO | 9.2 | 10.3 | 7.3 | 1.9 | 16.0 | 9.9 |
| | BaO | | 15.4 | | 6.0 | 15.0 | |
| | SrO | | 0.7 | | | | |
| | CaO | | 0.7 | | | | |
| | NaO | 2.8 | | | | | |
| | ZrO₂ | 1.1 | | | | | |
| | Bi₂O₃ | 53.6 | 62.5 | 80.6 | 77.1 | 37.5 | 84.6 |
| Linear expansion coefficient (×10⁻⁷/°C) | | - | 82 | 89 | 90 | 73 | 107 |
| Softening point (°C) | | - | 481 | 445 | 490 | 568 | 385 |
| Firing temperature (°C) | | - | 540 | 480 | 510 | 550 | 420 |
| Flowability | | - | × | × | × | × | × |
| Stability | | - | × | × | × | - | × |
| Remarks | | Not glassified | Crystallized | Crystallized | Crystallized | Insufficient sinterability | Crystallized |

As shown in Examples 1 to 4 of TABLE 1, it was possible for the glass to obtain good stability and good flowability when the glass fell within the composition range of the present invention. In Comparative Examples 1 to 6 of TABLE 2, by contrast, the glass was out of the composition range of the present invention and thus showed remarkable crystallization during firing or did not show favorable property values [0039.] Although the present invention has been described above with reference to the specific exemplary embodiment, the present invention is not limited to the above-described exemplary embodiment. Various modifications and variations of the embodiment described above will occur without departing from the scope of the present invention.

## Claims

1. A bismuth-based glass composition comprising Bi₂O₃, B₂O₃ and ZnO, wherein the bismuth-based glass composition comprises 55 to 80 mass% of Bi₂O₃, 10 to 15 mass % of B₂O₃, 5 to 15 mass% of ZnO, 0 to 8 mass% of SiO₂, 0.1 to 2 mass% of Al₂O₃, 0 to 3 mass% of TiO₂ and 0 to 3 mass% of ZrO₂;
wherein the bismuth-based glass composition contains BaO and optionally SrO, wherein the combined content of BaO and SrO is 0.1 to 5 mass%; and
wherein the bismuth-based glass composition is free of a coloring component and has a linear coefficient of thermal expansion of (70 to 90)x10⁻⁷/°C at 30 to 300°C and a softening point of 450 to 530°C.

2. The bismuth-based glass composition according to claim 1, wherein the bismuth-based glass composition is substantially free of PbO.

3. A sealing material comprising the bismuth-based glass composition according to any one of claims 1 or 2 and a heat-resistant filler, wherein the heat-resistant filler is contained in an amount of 1 to 40 mass%.

4. A bulkhead material comprising the bismuth-based glass composition according to any one of claims 1 or 2 and a heat-resistant filler, wherein the heat-resistant filler is contained in an amount of 1 to 40 mass%.

## Patentansprüche

1. Bismut-basierte Glaszusammensetzung, umfassend Bi₂O₃, B₂O₃ und ZnO, wobei die Bismut-basierte Glaszusammensetzung 55 bis 80 Massenprozent Bi₂O₃, 10 bis 15 Massenprozent B₂O₃, 5 bis 15 Massenprozent ZnO, 0 bis 8 Massenprozent SiO₂, 0,1 bis 2 Massenprozent Al₂O₃, 0 bis 3 Massenprozent TiO₂ und 0 bis 3 Massenprozent ZrO₂ umfasst;
wobei die Bismut-basierte Glaszusammensetzung BaO und optional SrO enthält, wobei der Gesamtgehalt an BaO und SrO 0,1 bis 5 Massenprozent beträgt; und
wobei die Bismut-basierte Glaszusammensetzung frei von einer farbgebenden Komponente ist und einen linearen Wärmeausdehnungskoeffizienten von (70 bis 90) × 10⁻⁷ / °C bei 30 bis 300 °C und einen Erweichungspunkt von 450 bis 530 °C aufweist.

2. Bismut-basierte Glaszusammensetzung nach Anspruch 1, wobei die Bismut-basierte Glaszusammensetzung im Wesentlichen frei von PbO ist.

3. Dichtungsmaterial, umfassend die Bismut-basierte Glaszusammensetzung nach einem der Ansprüche 1 oder 2 und einen hitzebeständigen Füllstoff, der in einer Menge von 1 bis 40 Massenprozent enthalten ist.

4. Trennwandmaterial, umfassend die Bismut-basierte Glaszusammensetzung nach einem der Ansprüche 1 oder 2 und einen hitzebeständigen Füllstoff, der in einer Menge von 1 bis 40 Massenprozent enthalten ist.

## Revendications

1. Composition de verre à base de bismuth comprenant du Bi₂O₃, du B₂O₃ et du ZnO, dans laquelle la composition de verre à base de bismuth comprend 55 à 80 % en masse de Bi₂O₃, 10 à 15 % en masse de B₂O₃, 5 à 15 % en masse de ZnO, 0 à 8 % en masse de SiO₂, 0,1 à 2 % en masse d'Al₂O₃, 0 à 3 % en masse de TiO₂ et 0 à 3 % en masse de ZrO₂ ;
dans laquelle la composition de verre à base de bismuth contient du BaO et éventuellement du SrO, dans laquelle la teneur combinée en BaO et en SrO est de 0,1 à 5 % en masse, et
dans laquelle la composition de verre à base de bismuth est exempte de composant colorant et a un coefficient linéaire de dilatation thermique de (70 à 90) x 10⁻⁷/°C à 30 à 300 °C et un point de ramollissement de 450 à 530 °C.

2. Composition de verre à base de bismuth selon la revendication 1, dans laquelle la composition de verre à base de bismuth est sensiblement exempte de PbO.

3. Matériau d'étanchéité comprenant la composition de verre à base de bismuth selon l'une quelconque des revendications 1 et 2 et une charge résistant à la chaleur, dans lequel la charge résistant à la chaleur est contenue en une quantité de 1 à 40 % en masse.

4. Matériau de cloison comprenant la composition de verre à base de bismuth selon l'une quelconque des revendications 1 et 2 et une charge résistant à la chaleur, dans lequel la charge résistant à la chaleur est contenue en une quantité de 1 à 40 % en masse.
